# EUROPEAN PATENT APPLICATION

(11) **EP 4 671 987 A1**
(43) Date of publication of application: **31.12.2025**
(21) Application number: 24910795.4
(22) Date of filing: 13.12.2024
(51) Int. Cl.: G06F 9/50

(54) **PROCESSOR RESOURCE SCHEDULING METHOD, DEVICE AND SYSTEM**

(30) Priority: 28.12.2023 CN 202311825166
(71) Applicant: Suzhou Metabrain Intelligent Technology Co., Ltd., Suzhou, Jiangsu 215000 (CN)
(72) Inventor: ZHONG, Richeng, Suzhou, Jiangsu 215000 (CN)
(74) Representative: Studio Torta S.p.A.
(86) International application number: PCT/CN2024/139408
(87) International publication number: WO 2025/139864

(57) **Abstract**

The present application provides a method, device and system of scheduling a resource of a processor, and relates to the field of computer technologies. The method includes: receiving a current task request forwarded by a proxy node from a client user corresponding to any container; adding the request to a queue: adding the current task request to a task request queue of a processor corresponding to the client user; allocating a resource: in a case where a resource of the processor is idle, fetching a task request at a head of the task request queue and allocating the resource of the processor to the currently fetched task request, so that the processor executes a task corresponding to the currently fetched task request; and returning a result: returning a task execution result to the proxy node after the task is completed and releasing the resource of the processor; and in a case where the task request queue is not empty, skipping to the step of allocating a resource. The present application may significantly reduce a probability of frequent failure of task request caused by insufficient resources when a plurality of tasks compete for a resource of the processor.

## Description

### Cross-Reference to Related Application

The present application claims priority to Chinese Patent Application No. 202311825166.2 entitled "METHOD, DEVICE, AND SYSTEM OF SCHEDULING RESOURCE OF PROCESSOR", filed with the China National Intellectual Property Administration on December 28, 2023, which is incorporated herein in its entirety by reference.

### Technical Field

The present application relates to the field of computer technologies, and in particular, to a method, device, and system of scheduling a resource of a processor.

### Background

With the advancement of the times, artificial intelligence (Al) technologies have gained explosive growth, and various computing accelerator cards for Al have emerged in the market. Since a computing accelerator card cannot concurrently run a plurality of tasks, when a client user request a graphics processing unit (GPU) to execute computing tasks, task requests often fail, severely affecting the user experience. At present, a mainstream solution is to introduce kubernetes (abbreviated as "K8S") and then add an additional customized GPU resource scheduling algorithm. Introduction of K8S will increase the complexity of a GPU resource cluster system, incur additional resource overhead, and reduce system performance. Moreover, in practical applications, customized scheduling algorithms often need to be introduced to achieve scheduling. The application and destruction of PODs (a smallest scheduling unit in K8S) may occupy resources, rendering them unusable. Frequent application and destruction of PODs may significantly reduce the effective utilization of resources. Additionally, Introduction of PODs will also increase the scheduling complexity and the difficulty of application debugging (troubleshooting), while consuming more server resources.

### Summary

An objective of the present application is to provide a method, device, and system of scheduling a resource of a processor to solve the problem of frequent failure of task requests caused by insufficient resources when a plurality of tasks compete for a resource of a processor in the related art.

The present application provides a system of scheduling a resource of a processor, including a client, a proxy node, and a plurality of server nodes, each server node including a plurality of containers, client users being in a one-to-one correspondence with the containers, each container corresponding to one processor, and each processor corresponding to multiple containers;
wherein the client is configured to send a current task request generated by a client user to the proxy node;
the proxy node is configured to: forward the current task request to a server node where a container corresponding to the client user is located according to a correspondence between a client user ID and a container user ID; and receive a task execution result returned by the server node, and forward the task execution result to the client user; and
the server node is configured to: add the current task request to a task request queue of a processor corresponding to the client user; in a case where a resource of the processor is idle and the task request queue is not empty, fetch a task request at a head of the task request queue, and allocate the resource of the processor to the currently fetched task request, so that the processor executes a task corresponding to the currently fetched task request; and return a task execution result to the proxy node after the task is completed and release the resource of the processor.

According to the system of scheduling a resource of a processor provided by the present application, the server node is configured to: obtain a container user ID corresponding to a currently running task in the processor; and in a case where the container user ID corresponding to the currently running task is same as a container user ID corresponding to the current task request, add the current task request to the head of the task request queue; otherwise, add the current task request to a tail of the task request queue; and the server node is further configured to: after returning the task execution result to the proxy node after the task is completed and before releasing the resource of the processor, obtain a container user ID corresponding to a task request at the head of the task request queue; and in a case where the container user ID corresponding to the task request at the head is same as the container user ID corresponding to the current task request, load the task request at the head into the processor for execution.

According to the system of scheduling a resource of a processor provided by the present application, the server node is configured to: in a case where a preceding task request of the client user corresponding to the current task request already exists in the task request queue, insert the current task request after the preceding task request; otherwise, add the current task request to the tail of the task request queue.

According to the system of scheduling a resource of a processor provided by the present application, the server node is configured to: return the task execution result to the proxy node after the task is completed; release the resource of the processor when no new task request from a client user corresponding to the currently completed task is received within a preset time period; and load a new task request into the processor for execution when a new task request from the client user corresponding to the currently completed task is received within the preset time period.

According to the system of scheduling a resource of a processor provided by the present application, the server node is configured to release the resource of the processor when time taken for the processor to execute the task corresponding to the currently fetched task request exceeds a preset execution time threshold.

According to the system of scheduling a resource of a processor provided by the present application, the proxy node is further configured to send login information of a client user to a server node;
the server node that receives the login information of the client user is further configured to: in a case where there is an idle container in the server node, establish a one-to-one correspondence between the client user and the idle container according to the login information of the client user, and return a message indicating successful container allocation to the proxy node; in a case where there is no idle container in the server node, return a message indicating failed container allocation to the proxy node; and
the proxy node is further configured to send the login information of the client user to a next server node in a polling manner in a case where the message indicating the failed container allocation is received.

The present application further provides a method of scheduling a resource of a processor, applied to each server node in a server node cluster and including:
receiving a current task request forwarded by a proxy node from a client user corresponding to any container, the current task request being generated by the client user and sent to the proxy node, and the proxy node being configured to forward the current task request according to a correspondence between a client user ID and a container user ID;
adding the current task request to a task request queue of a processor corresponding to the client user;
in a case where a resource of a processor is idle, fetching a task request at a head of the task request queue, and allocating the resource of the processor to the currently fetched task request, so that the processor executes a task corresponding to the currently fetched task request; and
returning a task execution result to the proxy node after the task is completed and releasing the resource of the processor, and in a case where the task request queue is not empty, skipping to the above step: in a case where a resource of a processor is idle, fetching a task request at a head of the task request queue, and allocating the resource of the processor to the currently fetched task request, so that the processor executes a task corresponding to the currently fetched task request.

According to the method of scheduling a resource of a processor provided by the present application, the adding the current task request to a task request queue of a processor corresponding to the client user includes:
obtaining a container user ID corresponding to a currently running task in the processor; and in a case where the container user ID corresponding to the currently running task is same as a container user ID corresponding to the current task request, adding the current task request to the head of the task request queue; otherwise, adding the current task request to a tail of the task request queue; and
the after returning a task execution result to the proxy node after the task is completed and before releasing the processor resource, the method further includes:
   obtaining a container user ID corresponding to a task request at the head of the task request queue; and in a case where the container user ID corresponding to the task request at the head is same as the container user ID corresponding to the current task request, loading the task request at the head into the processor for execution.

According to the method of scheduling a resource of a processor provided by the present application, the adding the current task request to a task request queue of a processor corresponding to the client user includes:
in a case where a preceding task request of the client user corresponding to the current task request already exists in the task request queue, inserting the current task request after the preceding task request; otherwise, adding the current task request to the tail of the task request queue.

According to the method of scheduling a resource of a processor provided by the present application, the returning a task execution result to the proxy node after the task is completed and releasing the resource of the processor include:
returning the task execution result to the proxy node after the task is completed; releasing the resource of the processor when no new task request from a client user corresponding to the currently completed task is received within a preset time period; and loading a new task request into the processor for execution when the new task request from the client user corresponding to the currently completed task is received within the preset time period.

According to the method of scheduling a resource of a processor provided by the present application, the loading a new task request into the processor for execution when the new task request from the client user corresponding to the currently completed task is received within the preset time period includes:
when the task is completed, obtaining a container user ID corresponding to the currently completed task; and
obtaining a container user ID of the new task request received within the preset time period, and in a case where the container user ID of the new task request is same as the container user ID corresponding to the currently completed task, loading the new task request into the processor for execution.

The method of scheduling a resource of a processor provided by the present application further includes: releasing the resource of the processor when time taken for the processor to execute the task corresponding to the currently fetched task request exceeds a preset execution time threshold.

The method of scheduling a resource of a processor provided by the present application further includes: when time taken for the processor to execute the task corresponding to the currently fetched task request exceeds a preset execution time threshold, saving a current execution progress of the task, readding the currently fetched task request to the tail of the task request queue, and releasing the resource of the processor.

In the method of scheduling a resource of a processor provided by the present application, before receiving the current task request forwarded by the proxy node from the client user corresponding to any container, the method further includes:
receiving login information of a client user sent by the proxy node; in a case where there is an idle container in the server node, establishing a one-to-one correspondence between the client user and the idle container according to the login information of the client user, and returning a message indicating successful container allocation to the proxy node; and in a case where there is no idle container in the server node, returning a message indicating failed container allocation to the proxy node, so as to instruct the proxy node to send the login information of the client user to a next server node in a polling manner until the container allocation is successful.

The present application further provides a method of scheduling a resource of a processor, applied to a proxy node in a server node cluster and including:
receiving a current task request sent by a client user; forwarding the current task request to a server node according to a correspondence between a client user ID and a container user ID of a container in the server node, the server node being a server node where a container corresponding to the client user is located, and the current task request being configured to instruct the server node to add the current task request to a task request queue of a processor corresponding to the client user; in a case where a resource of the processor is idle and the task request queue is not empty, fetching a task request at a head of the task request queue and allocating the resource of the processor to the currently fetched task request, so that the processor executes a task corresponding to the currently fetched task request; returning a task execution result to the proxy node after the task is completed, and releasing the resource of the processor; and
receiving the task execution result returned by the server node and forwarding the task execution result to the client user.

In the method of scheduling a resource of a processor provided by the present application, before the receiving a current task request sent by a client user, the method further includes:
sending login information of a client user to the server node, so that the server node that receives the login information of the client user is configured to: in a case where there is an idle container in the server node, establish a one-to-one correspondence between the client user and the idle container according to the login information of the client user, and return a message indicating successful container allocation to the proxy node; and in a case where there is no idle container, return a message indicating failed container allocation to the proxy node; and
sending the login information of the client user to a next server node in a polling manner in a case where the message indicating the failed container allocation is received.

The present application further provides a device of scheduling a resource of a processor, applied to each server node in a server node cluster and including:
a request receiving module, configured to receive a current task request forwarded by a proxy node from a client user corresponding to any container, the current task request being generated by the client user and sent to the proxy node, and the proxy node being configured to forward the current task request according to a correspondence between a client user ID and a container user ID;
a request enqueuing module, configured to add the current task request to a task request queue of a processor corresponding to the client user;
a resource allocation module, configured to, in a case where a resource of the processor is idle, fetch a task request at a head of the task request queue and allocate the resource of the processor to the currently fetched task request, so that the processor executes a task corresponding to the currently fetched task request; and
a result returning module, configured to return a task execution result to the proxy node after the task is completed and release the resource of the processor, and in a case where the task request queue is not empty, execute the resource allocation module.

The present application further provides a device of scheduling a resource of a processor, applied to a proxy node in a server node cluster and including:
a task request forwarding module, configured to: receive a current task request sent by a client user; forward the current task request to the server node according to a correspondence between a client user ID and a container user ID of a container of a server node, the server node being a server node where a container corresponding to the client user is located, and the current task request being used for instructing the server node to add the current task request to a task request queue of a processor corresponding to the client user; in a case where a resource of the processor is idle and the task request queue is not empty, fetch a task request at a head of the task request queue and allocate the resource of the processor to the currently fetched task request, so that the processor executes a task corresponding to the currently fetched task request; and return a task execution result to the proxy node after the task is completed and releasing the resource of the processor; and
an execution result forwarding module, configured to receive the task execution result returned by the server node, and forward the task execution result to the corresponding client user.

The present application further provides an electronic device, including a memory, a processor, and a computer program stored on the memory and executable on the processor, the processor being configured to implement, when executing the program, the steps of any method of scheduling a resource of a processor described above.

The present application further provides a non-volatile computer-readable storage medium, storing a computer program therein that, when executed by a processor, implements the steps of any method of scheduling a resource of a processor described above.

According to the method, device, and system of scheduling a resource of a processor provided by the present application, task requests from different client users hijacked and forwarded by the proxy node are added to the task request queue for sequential scheduling. Since containers are in a one-to-one correspondence with client users logging into a server node cluster, for client users successfully bound to containers of a server node, the task requests from the client users will all be allocated processor resources and executed, thereby significantly reducing the probability of frequent failure of task requests caused by insufficient resources when a plurality of tasks compete for processor resources.

### Brief Description of the Drawings

The drawings to be used in description of the present application or the related art will be briefly introduced below in order to describe the technical solutions in the embodiments of the present application or the related art more clearly. Apparently, the drawings described below are some embodiments of the present application. Those of ordinary skill in the art may obtain other drawings according to these drawings without paying creative work.
FIG. 1 is an architectural diagram of a server node in a method of scheduling a resource of a processor provided by the present application;
FIG. 2 is a first flowchart of a method of scheduling a resource of a processor provided by the present application;
FIG. 3 is a second flowchart of a method of scheduling a resource of a processor provided by the present application;
FIG. 4 is first schematic structural diagram of a device of scheduling a resource of a processor provided by the present application;
FIG. 5 is a second schematic structural diagram of a device of scheduling a resource of a processor provided by the present application;
FIG. 6 is a schematic structural diagram of a system of scheduling a resource of a processor provided by the present application; and
FIG. 7 is a schematic structural diagram of an electronic device provided by the present application.

### Detailed Description of the Embodiments

To make the objectives, the technical solutions, and the advantages of the present application clearer, the technical solutions in the present application will be described clearly and completely below with reference to the accompanying drawings in the present application. Apparently, the described embodiments are part rather than all of the embodiments of the present application. All the other embodiments obtained by those of ordinary skill in the art based on the embodiments in the present application without creative effort shall fall within the scope of protection of the present application.

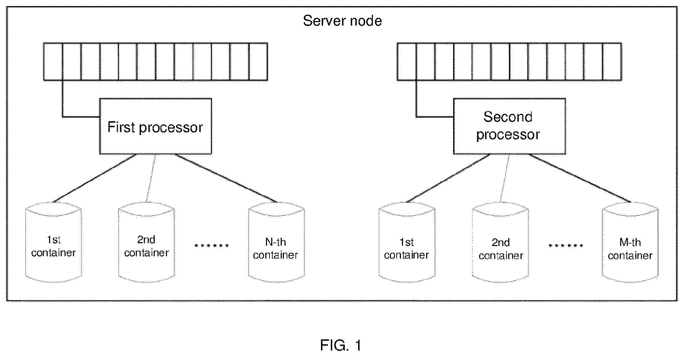

A method of scheduling a resource of a processor according to embodiments of the present application is applied to each server node in a server node cluster. The server node includes at least one processor, which may be a central processing unit (CPU), a GPU, or other dedicated computing accelerator cards. Optionally, the architecture of the server node is shown in FIG. 1. Each server node includes a plurality of containers (e.g., dockers), the containers are in a one-to-one correspondence with client users logging into the server node cluster. That is, after each client user logs in, a client user ID is bound to a container user, each container corresponds to one processor. Each processor corresponds to a plurality of containers, that is, a task request from a client user corresponding to a container associated with the processor is executed by the processor. The containers are configured with programs for executing tasks. Taking an Al computing accelerator card as an example, a main processing device in the Al computing accelerator card is a GPU, and its complete AI software stacks (an Al training software stack and an Al reasoning software stack) are configured in each container. That is, each client user has his own independent Al software stack.

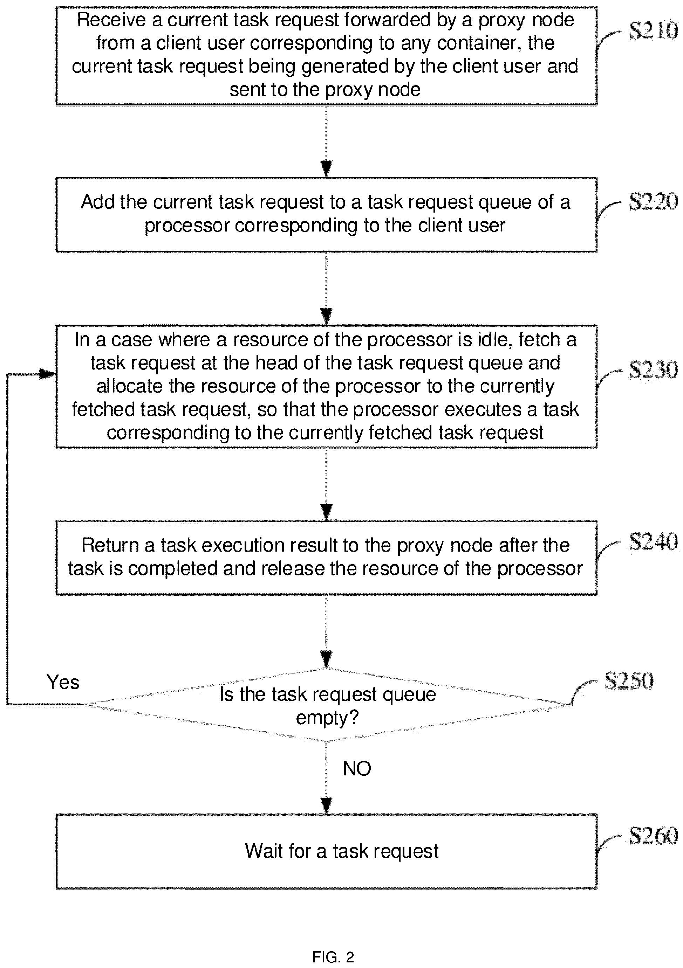

The flowchart of the method is shown in FIG. 2, and includes the following steps.

Step S210: receive a current task request forwarded by a proxy node from a client user corresponding to any container, the current task request being generated by the client user and sent to the proxy node. The proxy node is also a server node. A server node may be selected from a server node cluster as the proxy node. When a client user invokes an application programming interface (API) for processor resources to send a task request, the proxy node hijacks the task request and then forwards, according to a correspondence between a client user ID and a container user ID, the task request to a server node where a container corresponding to the client user is located.

Step S220: add the current task request to a task request queue of a processor corresponding to the client user, each processor maintains an independent task request queue. Normally, the current task request will be added, according to the first-in-first-out characteristic of a queue, to the tail of the task request queue, and waits for execution in queue order.

Step S230: in a case where a resource of the processor is idle, fetch a task request at the head of the task request queue and allocate the resource of the processor to the currently fetched task request, so that the processor executes a task corresponding to the currently fetched task request. Optionally, a container user ID, a name of a task to be executed, and an execution parameter in the task request at the head are obtained, a program corresponding to the name of the task to be executed is fetched from the container of the corresponding container user ID, and the processor loads and executes the program and the execution parameter. As such, resource allocation is realized. Taking an Al computing accelerator card for an example, the task request at the head is a request from a client user to execute training of a certain large Al model, wherein the execution parameter includes a training dataset for executing the training of the large Al model. A GPU resource of the Al computing accelerator card is allocated to the large Al model and the training dataset. That is, the GPU loads the large Al model and the training dataset to execute the training of the large Al model.

Step S240: return a task execution result to the proxy node after the task is completed and release the resource of the processor. Of course, after receiving the task execution result, the proxy node returns the task execution result to the corresponding client user. Optionally, the task execution result further includes a container user ID. After receiving the task execution result, the proxy node returns the task execution result to the corresponding user according to a client user ID corresponding to the container user ID. For example, after a task of executing the training of the large Al model is completed, a task execution result including a training completion message and the container user ID is returned to the proxy node. For another example, after a task of executing reasoning of the large AI model is completed, a task execution result including a reasoning result and a container user ID is returned to the proxy node.

Step S250: determine whether the task request queue is empty after the resource of the processor is released; if it is not empty, the method proceeds to step S230 to continue executing remaining tasks in the task request queue, otherwise, the method proceeds to step S260.

Step S260: wait for a task request, that is, wait for a task request to be enqueued.

In the method of scheduling a resource of a processor of the embodiments of the present application, task requests from different client users hijacked and forwarded by the proxy node are received and added to the task request queue for sequential scheduling. Since containers are in a one-to-one correspondence with client users logging into a server node cluster, for client users successfully bound to containers of a server node, the task requests from the client users will all be allocated a resource of the processor and executed, thereby significantly reducing the probability of frequent failure of task requests caused by insufficient resources when a plurality of tasks compete for a resource of the processor. Additionally, in embodiments of the present application, containers are in a one-to-one correspondence with client users. The containers store different task execution programs therein. For a task request from a client user, a task execution program in the corresponding container is loaded into the processor for execution, and the resource is released after the execution is completed. Thus, business isolation between different client users is achieved.

The method of scheduling a resource of a processor of the embodiments of the present application is particularly suitable for large Al model scenarios. The training or reasoning task of a large Al model generally occupies more than 80% of a GPU resource, resulting in request failure of a second large AI model task due to insufficient GPU resources. The method of scheduling a resource of a processor of the embodiments of the present application may significantly reduce the probability of request failure of the second large AI model task to a large extent.

In some alternative embodiments, step S220 includes: obtaining a container user ID corresponding to a task that is currently running in the processor; and in a case where the container user ID corresponding to task that is currently running is the same as a container user ID corresponding to the task request, the current task request is added to the head of the task request queue; otherwise, the current task request is added to a tail of the task request queue. On this basis, before releasing the resource of the processor, step S240 further includes:
obtaining a container user ID corresponding to the task request at the head of the task request queue; and in a case where the container user ID corresponding to the task request at the head is the same as the container user ID corresponding to the current task request, loading the task request at the head of the task request queue into the processor for execution.

In the embodiments of the present application, if the container user ID corresponding to the currently running task is the same as the container user ID corresponding to the current task request, it means that the currently running task and the current task request belong to a same client user. Since a program for executing a task in the container corresponding to the client user has been loaded into the processor, in order to avoid frequent loading of the program and frequent releasing of the resource, the current task request is added to the head of the task request queue. As a result, after the currently running task is completed, there is no need to release the resource of the processor, and the task in the current task request of the client user may be directly fetched from the head of the queue and executed.

In some optional embodiments, step S220 includes: in a case where a preceding task request of the client user corresponding to the current task request already exists in the task request queue, inserting the current task request after the preceding task request; otherwise, adding the current task request to the tail of the task request queue. That is, different task requests from the same client user are arranged in close proximity in the task request queue, thereby further avoiding frequent loading of task execution programs and frequent releasing of resources by different client users.

In some optional embodiments, step S240 includes: returning the task execution result to the proxy node after the task is completed; releasing the resource of the processor when no new task request is received from a client user corresponding to a currently completed task within a preset time period; and loading a new task request into the processor for execution when a new task request is received from the client user corresponding to the currently completed task within the preset time period.

Optionally, when the task is completed, a container user ID corresponding to the currently completed task is obtained.

A container user ID of the new task request received within the preset time period is obtained, and in a case where the container user ID of the new task request is the same as the container user ID corresponding to the currently completed task, the new task request is loaded into the processor for execution.

The preset time period has a value greater than or equal to 0. When the value is equal to 0, it indicates that the resource of the processor is released immediately after the task is completed. The preset time period may be set to different values according to actual application scenarios. For example, a client user needs to first train a large Al model, and after the training is completed, the client user will use the trained large AI model to perform reasoning on a plurality of sets of real-time data to obtain a plurality of sets of reasoning results. In this application scenario, a time interval between each task request is approximately 2 minutes, so the preset time period may be set to 3 minutes. The client user first initiates a task request for training of a large Al model. After the task request for training of a large Al model is completed, if a task request for reasoning on a corresponding large Al model is received within 3 minutes, the task request for reasoning on the large Al model is directly loaded into a GPU for execution. If the task request for reasoning on the large Al model is not received within 3 minutes, the GPU resource occupied by the client user is released.

In the embodiments of the present application, different preset time periods are set for different scenarios, thereby guaranteeing smooth execution of tasks of other client users in the task request queue while avoiding frequent loading of programs and frequent releasing of resources.

In some optional embodiments, the method of scheduling a resource of a processor further includes: releasing the resource of the processor when time taken for the processor to execute the task corresponding to the currently fetched task request exceeds a preset execution time threshold. The execution time threshold may be set according to time taken for different tasks to be completed under normal execution conditions. For example, the execution of a training task for a large Al model may be completed within 10 minutes, and then the execution time threshold may be set to 10 minutes. If the task cannot be finished within 10 minutes due to numerous data training sets or for other reasons, in order to ensure smooth execution of subsequent task requests in the task request queue, the GPU resource occupied by the training task for the large Al model is released, so as to execute subsequent task requests in the task request queue.

In some optional embodiments, the method of scheduling a resource of a processor further includes: saving a current execution progress of the task, readding the currently fetched task request to the tail of the task request queue, and releasing the resource of the processor when the time taken for the processor to execute the task corresponding to the currently fetched task request exceeds the preset execution time threshold. In the embodiments of the present application, in order to ensure that a task that times out may ultimately be executed, after the resource of the processor occupied by this task is released, the task request is readded to the tail of the task request queue.

In some optional embodiments, before receiving the current task request forwarded by the proxy node from the client user corresponding to any container, the method further includes: receiving login information of the client user sent by the proxy node; in a case where there is an idle container in a current server node, establishing a one-to-one correspondence between the client user and the idle container according to the login information of the client user, and returning a message indicating successful container allocation to the proxy node; and in a case where there is no idle container in the current server node, returning a message indicating failed container allocation to the proxy node, so as to instruct the proxy node to send the login information of the client user to a next server node in a polling manner, until the container allocation is successful. When a client user logs into the server node cluster, the proxy node sends login information including the client user ID to the current server node in a polling manner, in a case where there in an idle container (i.e., the idle container has not established one-to-one correspondence with any client user) in the current server node, a one-to-one correspondence between the client user and the idle container is established. That is, the client user ID is bound to a container user ID, and after the binding is completed, the message indicating successful container allocation is returned to the proxy node. In a case where there is no idle container in the current server node, the message indicating failed container allocation is returned to the proxy node, and the proxy node then sends the login information of the client user to a next server node. In the embodiments of the present application, each client user corresponds to one container, thereby realizing business isolation between different client users. Furthermore, within the server node, container user IDs are used to identify task requests from different client users, so as to achieve complete decoupling between client user management and server scheduling algorithms.

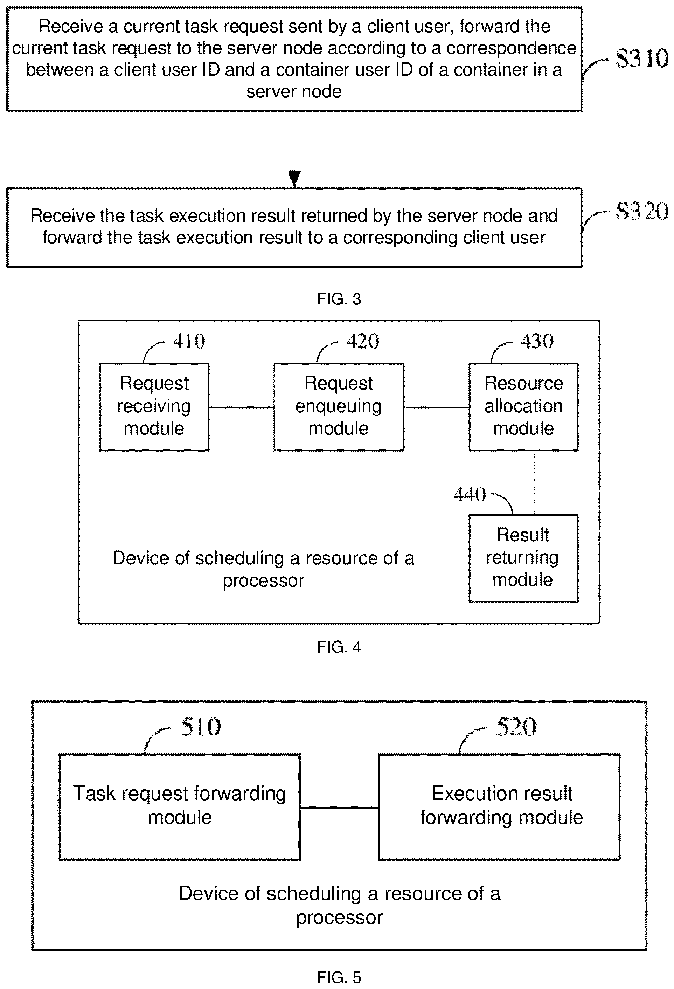

The present application further provides a method of scheduling a resource of a processor, applied to a proxy node in a server node cluster, as shown in FIG. 3, the method includes the following steps.

Step S310: receive a current task request sent by a client user; the current task request is forwarded to the server node according to a correspondence between a client user ID and a container user ID of a container in a server node. The server node is a server node where a container corresponding to the client user is located, and the current task request is configured to instruct the server node to add the current task request to a task request queue of a processor corresponding to the client user; in a case where a resource of the processor is idle and the task request queue is not empty, a task request at a head of the task request queue is fetched, and the resource of the processor is allocated to the currently fetched task request, so that the processor executes a task corresponding to the currently fetched task request; a task execution result is returned to the proxy node after the task is completed, and the resource of the processor is released, wherein each server node includes a plurality of containers, client users are in a one-to-one correspondence with the containers, each container corresponds to one processor, and each processor corresponds to a multiple containers.

Step S320: receive the task execution result returned by the server node and forward the task execution result to a corresponding client user.

In the method of scheduling a resource of a processor provided by the embodiments of the present application, task requests from different client users are hijacked and forwarded by the proxy node to the server node. The server node adds the task requests to the task request queue for sequential scheduling. Since containers are in a one-to-one correspondence with client users logging into a server node cluster, for client users successfully bound to containers of a server node, the task requests from the client users will all be allocated a resource of the processor and executed, thereby significantly reducing the probability of frequent failure for task request caused by insufficient resources when a plurality of tasks compete for a resource of the processor.

In some optional embodiments, before step S310, the method further includes: sending login information of the client user to the server node, so as to cause the server node that receives the login information of the client user to: in a case where there is an idle container in the server node, establish a one-to-one correspondence between the client user and the idle container based on the login information of the client user, and return the message indicating successful container allocation to the proxy node; and in a case where there is no idle container in the server node, return the message indicating failed container allocation to the proxy node.

In a case where the message indicating failed container allocation is received, the login information of the client user is sent to a next server node in a polling manner.

In the embodiments of the present application, client users are bound to containers in a polling manner by the proxy node, so that a number of containers bound to client users in each server node is substantially the same, thereby maintaining load balance among server nodes.

The device of scheduling a resource of a processor provided by the present application will be described below. The device of scheduling a resource of a processor described below and the method of scheduling a resource of a processor described above may be referred to each other.

FIG. 4 is a first schematic structural diagram of a device of scheduling a resource of a processor provided by the present application. As shown in FIG. 4, the device of scheduling a resource of a processor is applied to each server node in a server node cluster. Each server node includes a plurality of containers, client users are in a one-to-one correspondence with the containers, each container corresponds to one processor; and each processor corresponds to multiple containers. The device includes:
a request receiving module 410, configured to receive a current task request forwarded by a proxy node from a client user corresponding to any container, the current task request is generated by the client user, and sent to the proxy node. The proxy node is configured to forward a current task request according to a correspondence between a client user ID and a container user ID;
a request enqueuing module 420, configured to add the current task request to a task request queue of a processor corresponding to the client user;
a resource allocation module 430, configured to, in a case where a resource of the processor is idle, fetch a task request at a head of the task request queue, and allocate the resource of the processor to the currently fetched task request, so that the processor executes a task corresponding to the currently fetched task request; and
a result returning module 440, configured to return a task execution result to the proxy node after the task is completed and release the resource of the processor, and in a case where the ask request queue is not empty, skip to execute the resource allocation module 430.

FIG. 5 is a second schematic structural diagram of a device of scheduling a resource of a processor provided by the present application. As shown in FIG. 5, the device of scheduling a resource of a processor is applied to a proxy node in a server node cluster, and the device includes:
a task request forwarding module 510, configured to: receive a current task request sent by a client user; forward the current task request to the server node according to a correspondence between a client user ID and a container user ID of a container in a server node, the server node being a server node where a container corresponding to the client user is located, and the current task request being used for instructing the server node to add the current task request to a task request queue of a processor corresponding to the client user; in a case where the resource of the processor is idle and the task request queue is not empty, fetch a task request at a head of the task request queue, and allocate the resource of the processor to the currently fetched task request, so that the processor executes a task corresponding to the currently fetched task request; and return a task execution result to the proxy node after the task is completed, and release the resource of the processor, wherein each server node includes a plurality of containers, client users are in a one-to-one correspondence with the containers, each container corresponds to one processor, and each processor corresponds to multiple containers; and
an execution result forwarding module 520, configured to receive the task execution result returned by the server node, and forward the task execution result to the corresponding client user.

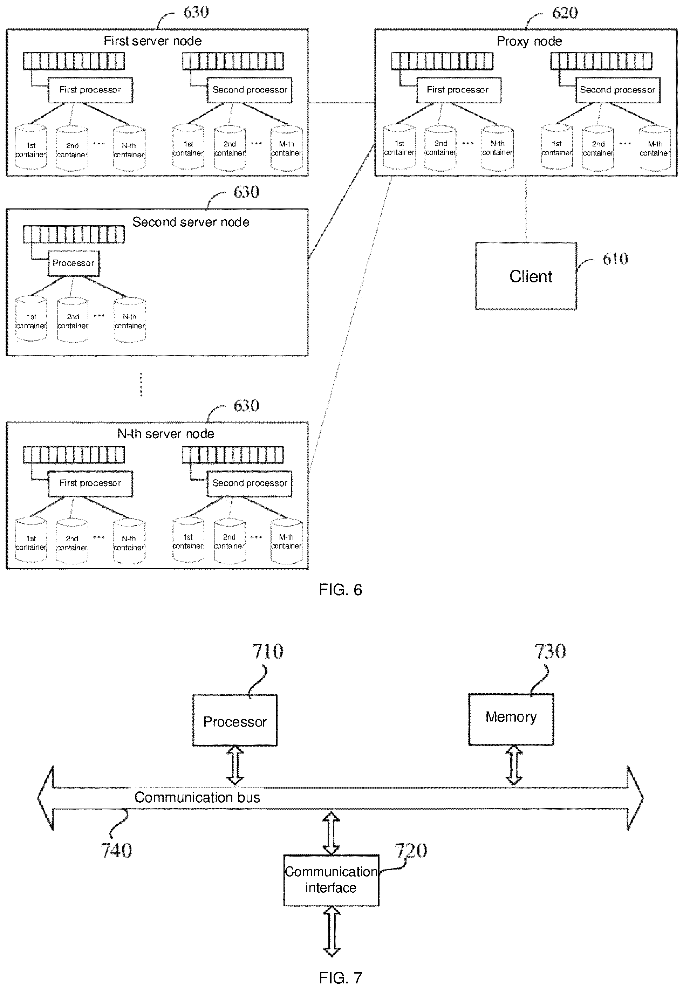

The present application further provides a system of scheduling a resource of a processor based on a plurality of nodes and a plurality of tasks. As shown in FIG. 6, the system includes a client 610, a proxy node 620, and a plurality of server nodes 630, each server node 630 includes a plurality of containers, client users are in a one-to-one correspondence with the containers, each container corresponds to one processor, and each processor corresponds to multiple containers.

The client 610 is configured to send a current task request generated by a client user to the proxy node 620.

The proxy node 620 is configured to: forward the current task request to a server node 630 according to a correspondence between a client user ID and a container user ID, forward the current task request to the server node 630 where a container corresponding to the client user is located, receive a task execution result returned by the server node 630 and forward the task execution result to the client user.

The server node 630 is configured to: add the current task request to a task request queue of a processor corresponding to the client user; in a case where the resource of the processor is idle and the task request queue is not empty, fetch a task request at the head of the task request queue and allocate the resource of the processor to the currently fetched task request, so that the processor executes a task corresponding to the currently fetched task request; and return a task execution result to the proxy node 620 after the task is completed and release the resource of the processor.

According to the system of scheduling a resource of a processor provided by the embodiments of the present application, task requests from different client users are hijacked and forwarded by the proxy node 620 to the server node 630. The server node 630 adds the task requests to the task request queue for sequential scheduling. Since containers are in a one-to-one correspondence with client users logging into a server node cluster, for a client user successfully bound to a container of a server node, the task request from the client user will all be allocated a resource of the processor and executed, thereby significantly reducing the probability of frequent failure of task request caused by insufficient resources when a plurality of tasks compete for a resource of the processor.

In some optional embodiments, the server node 630 is configured to: obtain a container user ID corresponding to a currently running task in the processor; in a case where the container user ID corresponding to the currently running task is the same as a container user ID corresponding to the current task request, add the current task request to the head of the task request queue; otherwise, add the current task request to a tail of the task request queue; and the server node 630 is further configured to: after returning the task execution result to the proxy node 620 after the task is completed, and before releasing the resource of the processor, obtain a container user ID corresponding to the task request at the head of the task request queue; and in a case where the container user ID corresponding to the task request at the head is the same as the container user ID corresponding to the current task request, load the task request at the head into the processor for execution.

In some optional embodiments, the server node 630 is configured to: in a case where a preceding task request of the client user corresponding to the current task request already exists in the task request queue, insert the current task request after the preceding task request; otherwise, add the current task request to the tail of the task request queue.

In some optional embodiments, the server node 630 is configured to: return the task execution result to the proxy node 620 after the task is completed; release the resource of the processor when no new task request is received from a client user corresponding to a currently completed task within a preset time period; and load a new task request into the processor for execution when a new task request is received from the client user corresponding to the currently completed task within the preset time period.

In some optional embodiments, the server node 630 is configured to release the resource of the processor when time taken for the processor to execute the task corresponding to the currently fetched task request exceeds a preset execution time threshold.

In some optional embodiments, the proxy node 620 is further configured to send login information of the client user to the server node.

The server node 630 that receives the login information of the client user is further configured to: in a case where there is an idle container in the server node 630, establish a one-to-one correspondence between the client user and the idle container according to the login information of the client user, and return the message indicating successful container allocation to the proxy node 620; and in a case where there is no idle container, return the message indicating failed container allocation to the proxy node 620.

The proxy node 620 is further configured to, in response to receive the message indicating failed container allocation, send the login information of the client user to a next server node 630 in a polling manner.

FIG. 7 is a schematic structural diagram of an electronic device provided by the present application. As shown in FIG. 7, the electronic device may include a processor 710, a communications interface 720, a memory 730, and a communication bus 740, wherein the processor 710, the communications interface 720, and the memory 730 communicate with one another via the communication bus 740. The processor 710 may call logic instructions in the memory 730 to execute the method of scheduling a resource of a processor applied to each server node in a server node cluster, the method includes following steps:
receiving a current task request forwarded by a proxy node from a client user corresponding to any container, the current task request being generated by the client user and sent to the proxy node, and the proxy node being configured to forward the current task request according to a correspondence between a client user ID and a container user ID;
adding the current task request to a task request queue of a processor corresponding to the client user;
in a case where a resource of the processor is idle, fetching a task request at a head of the task request queue, and allocating the resource of the processor to the currently fetched task request, so that the processor executes a task corresponding to the currently fetched task request; and
returning a task execution result to the proxy node and releasing the resource of the processor after the task is completed, and in a case where the task request queue is not empty, skipping to the above step: in a case where a resource of the processor is idle, fetching a task request at a head of the task request queue, and allocating the resource of the processor to the currently fetched task request, so that the processor executes a task corresponding to the currently fetched task request;
or, executing a method of scheduling a resource of a processor applied to a proxy node in a server node cluster, the method includes:
   receiving a current task request sent by a client user; forwarding the current task request to the server node according to a correspondence between a client user ID and a container user ID of a container in a server node, the server node being a server node where a container corresponding to the client user is located, and the current task request being configured to instruct the server node to add the current task request to a task request queue of a processor corresponding to the client user; in a case where a resource of the processor is idle and the task request queue is not empty, fetching a task request at a head of the task request queue and allocating the resource of the processor to the currently fetched task request, so that the processor executes a task corresponding to the currently fetched task request; returning a task execution result to the proxy node after the task is completed and releasing the resource of the processor, wherein each server node includes a plurality of containers, client users are in a one-to-one correspondence with the containers, each container corresponds to one processor, and each processor corresponds to multiple containers; and
   receiving the task execution result returned by the server node and forwarding the task execution result to the corresponding client user.

Moreover, the logic instructions in the memory 730 above may be implemented in a form of a software function unit, and stored in a non-volatile computer-readable storage medium when sold or used as a separate product. Based on such an understanding, the technical solutions in the present application essentially, or the part contributing to the related art, or part of the technical solutions may be embodied in the form of a software product. The computer software product is stored in a non-volatile storage medium, and includes several instructions to enable a computer device (e.g., a personal computer, a server, a network device, or the like) to perform all or part of the steps of the methods according to the embodiments of the present application. The above non-volatile storage medium includes various non-volatile storage media which can store program codes, such as a USB flash disk, a mobile hard disk drive, a read-only memory (ROM), a random access memory (RAM), a magnetic disk, or an optical disk.

The present application further provides a computer program product, including a computer program stored on a non-volatile computer-readable storage medium, wherein the computer program includes program instructions which, when executed by a computer, enable the computer to execute a method of scheduling a resource of a processor applied to each server node in a server node cluster, which includes following steps:
receiving a current task request forwarded by a proxy node from a client user corresponding to any container, the current task request being generated by the client user and sent to the proxy node, and the proxy node being configured to forward the current task request according to a correspondence between a client user ID and a container user ID;
adding the current task request to a task request queue of a processor corresponding to the client user;
in a case where a resource of the processor is idle, fetching a task request at a head of the task request queue, and allocating the resource of the processor to the currently fetched task request, so that the processor executes a task corresponding to the currently fetched task request; and
returning a task execution result to the proxy node after the task is completed and releasing the resource of the processor, and in a case where the task request queue is not empty, skipping to the above step: in a case where a resource of the processor is idle, fetching a task request at a head of the task request queue, and allocating the resource of the processor to the currently fetched task request, so that the processor executes a task corresponding to the currently fetched task request.
or, executing a method of scheduling a resource of a processor applied to a proxy node in a server node cluster, the method including:
   receiving a current task request sent by a client user; and forwarding the current task request to the server node according to a correspondence between a client user ID and a container user ID of a container in a server node, the server node being a server node where a container corresponding to the client user is located, and the current task request being used for instructing the server node to add the current task request to a task request queue of a processor corresponding to the client user; in a case where the resource of the processor is idle and the task request queue is not empty, fetching a task request at a head of the task request queue and allocating the resource of the processor to the currently fetched task request, so that the processor executes a task corresponding to the currently fetched task request; returning a task execution result to the proxy node after the task is completed and releasing the resource of the processor, wherein each server node includes a plurality of containers, client users are in a one-to-one correspondence with the containers, each container corresponds to one processor, and each processor corresponds to multiple containers; and
   receiving the task execution result returned by the server node and forwarding the task execution result to the corresponding client user.

The present application further provides a non-volatile computer-readable storage medium, which stores a computer program therein, when executed by a processor, implements a method of scheduling a resource of a processor applied to each server node in a server node cluster. The method includes following steps:
receiving a current task request forwarded by a proxy node from a client user corresponding to any container, the current task request being generated by the client user and sent to the proxy node, and the proxy node being configured to forward the current task request according to a correspondence between a client user ID and a container user ID;
adding the current task request to a task request queue of a processor corresponding to the client user;
in a case where the resource of the processor is idle, fetching a task request at a head of the task request queue, and allocating the resource of the processor to the currently fetched task request, so that the processor executes a task corresponding to the currently fetched task request; and
returning a task execution result to the proxy node after the task is completed and releasing the resource of the processor, and in a case where the task request queue is not empty, skipping to the above step: in a case where the resource of the processor is idle, fetching a task request at a head of the task request queue, and allocating the resource of the processor to the currently fetched task request, so that the processor executes a task corresponding to the currently fetched task request.
or, executing a method of scheduling a resource of a processor applied to a proxy node in a server node cluster, the method including:
   receiving a current task request sent by a client user; and forwarding the current task request to the server node according to a correspondence between a client user ID and a container user ID in a container of a server node, the server node being a server node where a container corresponding to the client user is located and the current task request being used for instructing the server node to add the current task request to a task request queue of a processor corresponding to the client user; in a case where a resource of the processor is idle and the task request queue is not empty, fetching a task request at a head of the task request queue and allocating the resource of the processor to the currently fetched task request, so that the processor executes a task corresponding to the currently fetched task request; returning a task execution result to the proxy node after the task is completed and releasing the resource of the processor, wherein each server node includes a plurality of containers, client users are in a one-to-one correspondence with the containers, each container corresponds to one processor, and each processor corresponds to multiple containers; and
   receiving the task execution result returned by the server node and forwarding the task execution result to the corresponding client user.

The device embodiments described above are merely schematic, wherein a unit described as a separate component may or may not be physically separated, and a component displayed as a unit may or may not be a physical unit. That is, the component may be located at one place, or distributed on multiple network units. Part or all of the modules may be selected based on actual needs to achieve the objectives of the solutions of the embodiments. Those of ordinary skill in the art can understand and implement the embodiments without paying creative efforts.

Through the description of the foregoing implementations, those skilled in the art can clearly understand that the implementations can be implemented by means of software plus a necessary universal hardware platform, or certainly, can be implemented by hardware. Based on such an understanding, the technical solutions above essentially or the part contributing to the related art may be embodied in the form of a software product. The computer software product may be stored in a non-volatile computer-readable storage medium, such as a ROM/RAM, a magnetic disk, and an optical disk, and includes several instructions to enable a computer device (e.g., a personal computer, a server, a network device, or the like) to perform the method according to the embodiments or some of the embodiments.

Finally, it should be noted that the above embodiments are merely used to describe the technical solutions of the present application, but are not limit by the technical solutions. Although the present application is described in detail with reference to the foregoing embodiments, those of ordinary skill in the art should understand that they can still modify the technical solutions described in the foregoing embodiments, or make equivalent replacements on some technical features of the present application. These modifications or replacements do not make the essence of the corresponding technical solutions deviate from the spirit and scope of the technical solutions of the embodiments of the present application.

## Claims

1. A system of scheduling a resource of a processor, comprising a client, a proxy node, and a plurality of server nodes, each server node comprising a plurality of containers, client users being in a one-to-one correspondence with the containers, each container corresponding to one processor, and each processor corresponding to multiple containers;
wherein the client is configured to send a current task request generated by a client user to the proxy node;
the proxy node is configured to: forward the current task request to a server node where a container corresponding to the client user is located according to a correspondence between a client user ID and a container user ID; and receive a task execution result returned by the server node, and forward the task execution result to the client user; and
the server node is configured to: add the current task request to a task request queue of a processor corresponding to the client user; in a case where a resource of the processor is idle and the task request queue is not empty, fetch a task request at a head of the task request queue, and allocate the resource of the processor to the currently fetched task request, so that the processor executes a task corresponding to the currently fetched task request; and return a task execution result to the proxy node after the task is completed and release the resource of the processor.

2. The system according to claim 1, wherein the server node is configured to: obtain a container user **ID** corresponding to a currently running task in the processor; and in a case where the container user ID corresponding to the currently running task is same as a container user **ID** corresponding to the current task request, add the current task request to the head of the task request queue; otherwise, add the current task request to a tail of the task request queue; and the server node is further configured to: after returning the task execution result to the proxy node after the task is completed and before releasing the resource of the processor, obtain a container user **ID** corresponding to a task request at the head of the task request queue; and in a case where the container user ID corresponding to the task request at the head is same as the container user **ID** corresponding to the current task request, load the task request at the head into the processor for execution.

3. The system according to claim 2, wherein the server node is configured to: in a case where a preceding task request of the client user corresponding to the current task request already exists in the task request queue, insert the current task request after the preceding task request; otherwise, add the current task request to the tail of the task request queue.

4. The system according to claim 1, wherein the server node is configured to: return the task execution result to the proxy node after the task is completed; release the resource of the processor when no new task request from a client user corresponding to the currently completed task is received within a preset time period; and load a new task request into the processor for execution when a new task request from the client user corresponding to the currently completed task is received within the preset time period.

5. The system according to claim 1, wherein the server node is configured to release the resource of the processor when time taken for the processor to execute the task corresponding to the currently fetched task request exceeds a preset execution time threshold.

6. The system according to any one of claims 1 to 5, wherein the proxy node is further configured to send login information of a client user to a server node;
the server node that receives the login information of the client user is further configured to: in a case where there is an idle container in the server node, establish a one-to-one correspondence between the client user and the idle container according to the login information of the client user, and return a message indicating successful container allocation to the proxy node; in a case where there is no idle container in the server node, return a message indicating failed container allocation to the proxy node; and
the proxy node is further configured to send the login information of the client user to a next server node in a polling manner in a case where the message indicating the failed container allocation is received.

7. A method of scheduling a resource of a processor, applied to each server node in a server node cluster and comprising:
receiving a current task request forwarded by a proxy node from a client user corresponding to any container, the current task request being generated by the client user and sent to the proxy node, and the proxy node being configured to forward the current task request according to a correspondence between a client user ID and a container user ID;
adding the current task request to a task request queue of a processor corresponding to the client user;
in a case where a resource of the processor is idle, fetching a task request at a head of the task request queue, and allocating the resource of the processor to the currently fetched task request, so that the processor executes a task corresponding to the currently fetched task request; and
returning a task execution result to the proxy node after the task is completed and releasing the resource of the processor, and in a case where the task request queue is not empty, skipping to the above step: in a case where a resource of a processor is idle, fetching a task request at a head of the task request queue, and allocating the resource of the processor to the currently fetched task request, so that the processor executes a task corresponding to the currently fetched task request.

8. The method according to claim 7, wherein the adding the current task request to a task request queue of a processor corresponding to the client user comprises: obtaining a container user ID corresponding to a currently running task in the processor; and in a case where the container user ID corresponding to the currently running task is same as a container user ID corresponding to the current task request, adding the current task request to the head of the task request queue; otherwise, adding the current task request to a tail of the task request queue; and
the after returning a task execution result to the proxy node after the task is completed and before releasing the processor resource, the method further comprises: obtaining a container user ID corresponding to a task request at the head of the task request queue; and in a case where the container user ID corresponding to the task request at the head is same as the container user ID corresponding to the current task request, loading the task request at the head into the processor for execution.

9. The method according to claim 8, wherein the adding the current task request to a task request queue of a processor corresponding to the client user comprises:
in a case where a preceding task request of the client user corresponding to the current task request already exists in the task request queue, inserting the current task request after the preceding task request; otherwise, adding the current task request to the tail of the task request queue.

10. The method according to claim 7, wherein the returning a task execution result to the proxy node after the task is completed and releasing the resource of the processor comprise:
returning the task execution result to the proxy node after the task is completed; releasing the resource of the processor when no new task request from a client user corresponding to the currently completed task is received within a preset time period; and loading a new task request into the processor for execution when the new task request from the client user corresponding to the currently completed task is received within the preset time period.

11. The method according to claim 10, wherein the loading a new task request into the processor for execution when the new task request from the client user corresponding to the currently completed task is received within the preset time period comprises:
when the task is completed, obtaining a container user ID corresponding to the currently completed task; and
obtaining a container user ID of the new task request received within the preset time period, and in a case where the container user ID of the new task request is same as the container user ID corresponding to the currently completed task, loading the new task request into the processor for execution.

12. The method according to claim 7, further comprising: releasing the resource of the processor when time taken for the processor to execute the task corresponding to the currently fetched task request exceeds a preset execution time threshold.

13. The method according to claim 7, further comprising: when time taken for the processor to execute the task corresponding to the currently fetched task request exceeds a preset execution time threshold, saving a current execution progress of the task, readding the currently fetched task request to the tail of the task request queue, and releasing the resource of the processor.

14. The method according to any one of claims 7 to 13, before receiving the current task request forwarded by the proxy node from the client user corresponding to any container, further comprising:
receiving login information of a client user sent by the proxy node; in a case where there is an idle container in the server node, establishing a one-to-one correspondence between the client user and the idle container according to the login information of the client user, and returning a message indicating successful container allocation to the proxy node; and in a case where there is no idle container in the server node, returning a message indicating failed container allocation to the proxy node, so as to instruct the proxy node to send the login information of the client user to a next server node in a polling manner until the container allocation is successful.

15. A method of scheduling a resource of a processor, applied to a proxy node in a server node cluster and comprising:
receiving a current task request sent by a client user; forwarding the current task request to a server node according to a correspondence between a client user ID and a container user ID of a container in the server node, the server node being a server node where a container corresponding to the client user is located, and the current task request being configured to instruct the server node to add the current task request to a task request queue of a processor corresponding to the client user; in a case where a resource of the processor is idle and the task request queue is not empty, fetching a task request at a head of the task request queue and allocating the resource of the processor to the currently fetched task request, so that the processor executes a task corresponding to the currently fetched task request; returning a task execution result to the proxy node after the task is completed, and releasing the resource of the processor; and
receiving the task execution result returned by the server node and forwarding the task execution result to the client user.

16. The method of scheduling a resource of a processor according to claim 15, before the receiving a current task request sent by a client user, further comprising:
sending login information of a client user to the server node, so that the server node that receives the login information of the client user is configured to: in a case where there is an idle container in the server node, establish a one-to-one correspondence between the client user and the idle container according to the login information of the client user, and return a message indicating successful container allocation to the proxy node; and in a case where there is no idle container, return a message indicating failed container allocation to the proxy node; and
sending the login information of the client user to a next server node in a polling manner in a case where the message indicating the failed container allocation is received.

17. A device of scheduling a resource of a processor, applied to each server node in a server node cluster and comprising:
a request receiving module, configured to receive a current task request forwarded by a proxy node from a client user corresponding to any container, the current task request being generated by the client user and sent to the proxy node, and the proxy node being configured to forward the current task request according to a correspondence between a client user ID and a container user ID;
a request enqueuing module, configured to add the current task request to a task request queue of a processor corresponding to the client user;
a resource allocation module, configured to, in a case where a resource of the processor is idle, fetch a task request at a head of the task request queue and allocate the resource of the processor to the currently fetched task request, so that the processor executes a task corresponding to the currently fetched task request; and
a result returning module, configured to return a task execution result to the proxy node after the task is completed and release the resource of the processor, and in a case where the task request queue is not empty, execute the resource allocation module.

18. A device of scheduling a resource of a processor, applied to a proxy node in a server node cluster and comprising:
a task request forwarding module, configured to: receive a current task request sent by a client user; forward the current task request to the server node according to a correspondence between a client user ID and a container user ID of a container of a server node, the server node being a server node where a container corresponding to the client user is located, and the current task request being used for instructing the server node to add the current task request to a task request queue of a processor corresponding to the client user; in a case where a resource of the processor is idle and the task request queue is not empty, fetch a task request at a head of the task request queue and allocate the resource of the processor to the currently fetched task request, so that the processor executes a task corresponding to the currently fetched task request; and return a task execution result to the proxy node after the task is completed and releasing the resource of the processor; and
an execution result forwarding module, configured to receive the task execution result returned by the server node, and forward the task execution result to the client user.

19. An electronic device, comprising a memory, a processor, and a computer program stored on the memory and executable on the processor, the processor being configured to implement, when executing the computer program, steps of the method according to any one of claims 7 to 14, or implement, when executing the computer program, steps of the method according to any one of claims 15 and 16.

20. A non-volatile computer-readable storage medium, storing a computer program therein that, when executed by a processor, implements steps of the method according to any one of claims 7 to 14 or steps of the method according to any one of claims 15 and 16.
